# EUROPEAN PATENT APPLICATION

(11) **EP 4 793 096 A1**
(43) Date of publication of application: **19.08.2026**
(21) Application number: 24877101.6
(22) Date of filing: 03.10.2024
(51) Int. Cl.: B60Q 1/50, B60Q 1/00, B60Q 1/14, B60Q 1/068, F21V 7/00, F21V 14/04, F21W 102/14, F21W 103/60, F21Y 115/10

(54) **VEHICLE HEADLIGHT DEVICE**

(30) Priority: 11.10.2023 JP 2023176078
(71) Applicant: Koito Manufacturing Co., Ltd., Shinagawa-ku, Tokyo 141-0001 (JP)
(72) Inventor: OZAWA, Haruyuki, Shizuoka-shi Shizuoka 424-8764 (JP); MURAMATSU, Takao, Shizuoka-shi Shizuoka 424-8764 (JP)
(74) Representative: Algemeen Octrooi- en Merkenbureau B.V.
(86) International application number: PCT/JP2024/035501
(87) International publication number: WO 2025/079505

(57) **Abstract**

A vehicle headlamp apparatus includes: a first high beam unit capable of formation of a first high beam light distribution pattern and road surface drawing in a first irradiation range (34); and a second high beam unit capable of formation of a second high beam light distribution pattern in a second irradiation range (36). The first irradiation range (34) is displaced downward with respect to the second irradiation range (36) to include an overlapping area (38) in which the first irradiation range (34) and the second irradiation range (36) overlap and a lower area (40) below the overlapping area (38) and outside the second irradiation range (38), and the first high beam unit forms a road surface drawing pattern (46) in the lower area (40).

## Description

### TECHNICAL FIELD

The present invention relates to, for example, a vehicle headlamp apparatus that can be mounted on a vehicle such as a car.

### BACKGROUND ART

In the related art, a headlamp equipped with a light source capable of forming various desired light patterns, such as a matrix LED, liquid crystal apparatus, and DMD (Digital Mirror Device) apparatus, is known (e.g., see Patent literature 1). Using this light source, the headlamp can perform both ADB (Adaptive Driving Beam) control, which dynamically and adaptively controls the light distribution pattern for a high beam based on the condition around a vehicle, and road surface drawing, which displays a drawing pattern such as graphics, letters, and symbols on the road surface around the vehicle.

### RELATED-ART LITERATURE

### PATENT LITERATURE

Patent literature 1: JP 2020-131922

### SUMMARY OF INVENTION

### TECHNICAL PROBLEM

We have reviewed the above vehicle lamp and have come to recognize the following issues. In this headlamp, the optical axis of the headlamp is, under normal conditions including during the execution of ADB control, generally directed in a direction parallel to the horizontal plane to radiate a high beam to a distance. When road surface drawing is performed, on the other hand, the leveling apparatus in the headlamp is activated to direct the optical axis of the headlamp more downward than normal in order to irradiate the nearby road surface with a desired pattern. In this way, leveling control is used to switch between high beam irradiation and road surface drawing. Therefore, it can be practically difficult to perform high beam irradiation and road surface drawing at the same time. One conceivable approach to achieve this is to, for example, add a unit dedicated to road surface drawing to the headlamp, but this may lead to an increase in the cost of manufacturing the headlamp.

The present invention addresses these issues, and an illustrative purpose thereof is to provide a vehicle headlamp apparatus capable of both high beam irradiation and road surface drawing.

### SOLUTION TO PROBLEM

A vehicle headlamp apparatus according to an embodiment of the present invention includes: a first high beam unit capable of formation of a first high beam light distribution pattern and road surface drawing in a first irradiation range; and a second high beam unit capable of formation of a second high beam light distribution pattern in a second irradiation range. The first irradiation range is displaced downward with respect to the second irradiation range to include an overlapping area in which the first irradiation range and the second irradiation range overlap and a lower area below the overlapping area and outside the second irradiation range, and the first high beam unit forms a road surface drawing pattern in the lower area.

According to this embodiment, the first irradiation range of the first high beam unit overlaps the second irradiation range of the second high beam unit and extends further downward. The first high beam unit can provide road surface drawing by utilizing the lower area in the first irradiation range displaced downward with respect to the second irradiation range. Further, at least the second high beam unit or both of the two high beam units can be used to radiate the high beam. In this way, it is possible to provide a vehicle headlamp apparatus capable of providing both high beam irradiation and road surface drawing.

The first high beam unit may form at least a portion of the first high beam light distribution pattern in the overlapping area of the first irradiation range, and the second high beam unit may form at least a portion of the second high beam light distribution pattern in the overlapping area of the second irradiation range. In this way, it is possible to radiate the first high beam light distribution pattern and the second high beam light distribution pattern superposed in the overlapping area of the first irradiation range and the second irradiation range and to provide high beam irradiation of higher luminous intensity. This makes it easy to meet the predetermined luminous intensity standard required of high beams.

The first high beam unit may be arranged to have a downward angular offset with respect to the second high beam unit so that the first irradiation range is displaced downward with respect to the second irradiation range, and the downward angular offset may remain unchanged regardless of whether the first high beam unit is performing road surface drawing. In this way, the first high beam unit can set the lower area for road surface drawing in the first irradiation range according to the relative angular position of first high beam unit with respect to the second high beam unit. Due to the fixed angular relationship between the two high beam units, there is no need to rely on a leveling operation to switch between high beam irradiation and road surface drawing as in the related art. Accordingly, the vehicle headlamp apparatus can easily perform high beam irradiation and road surface drawing at the same time.

The downward angular offset may be at least 1.00°. In this way, the lower area in the first irradiation range can be provided with a practically appropriate vertical height for road surface drawing.

The downward angular offset may be 3.00° at most. In this way, the lower area in the first irradiation range for road surface drawing can be provided with a practically appropriate vertical height. In addition to that, this angular offset condition helps to prevent the vertical height of the overlapping area for high beam irradiation from becoming too small.

The first high beam unit may be equipped with an angular offset adjuster to adjust the downward angular offset.

The angular offset of the first high beam unit with respect to a horizontal line may be in a range between -2.50° and -4.50°, inclusive. The angular offset of the second high beam unit with respect to a horizontal line may be in a range between +2.00° and -2.00°, inclusive.

The second irradiation range may include an upper area above the overlapping area and outside the first irradiation range.

The vehicle headlamp apparatus may be equipped with a driver side headlamp arranged on a driver side of a vehicle and a front passenger side headlamp arranged on a front passenger side of the vehicle. The first high beam unit may be mounted on the driver side headlamp, and the second high beam unit may be mounted on the front passenger side headlamp. This makes it easy for the first high beam unit to perform road surface drawing at a position on the road surface that is easy for the driver to see.

Optional combinations of the aforementioned constituting elements, and mutual substitution of constituting elements and implementations of the present invention between methods, apparatuses, systems, computer programs, recording mediums, etc. may also be practiced as additional modes of the present invention.

### ADVANTAGEOUS EFFECTS OF INVENTION

According to the present invention, it is possible to provide a vehicle headlamp apparatus capable of both high beam irradiation and road surface drawing.

### BRIEF DESCRIPTION OF DRAWINGS

[Fig. 1] Fig. 1 is a schematic view showing a state in which the vehicle lamp according to the embodiment is mounted on a vehicle.
[Fig. 2] Fig. 2 is a schematic cross-sectional view showing a schematic configuration of the vehicle lamp according to the embodiment.
[Fig. 3] Fig. 3A is a schematic view showing an illustrative irradiation direction of a vehicle lamp according to a comparative example, and Fig. 3B is a schematic view showing an illustrative irradiation range of the vehicle lamp according to the comparative example.
[Fig. 4] Fig. 4A is a schematic view showing an illustrative irradiation direction of the vehicle lamp according to the embodiment, and Fig. 4B is a schematic view showing an illustrative irradiation range of the vehicle lamp according to the embodiment.
[Fig. 5] Fig. 5 is a schematic view showing an exemplary operation that can be performed in the vehicle lamp according to the embodiment.

### DESCRIPTION OF EMBODIMENTS

Hereinafter, the invention will be described based on preferred embodiments with reference to drawings. The embodiments do not limit the scope of the invention but exemplify the invention. Not all of the features and the combinations thereof described in the embodiments are necessarily essential to the invention. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification or the claims do not indicate an order or importance by any means and are used to distinguish a certain feature from the others. Those of the members that are not material to the description of the embodiments are omitted in the drawings.

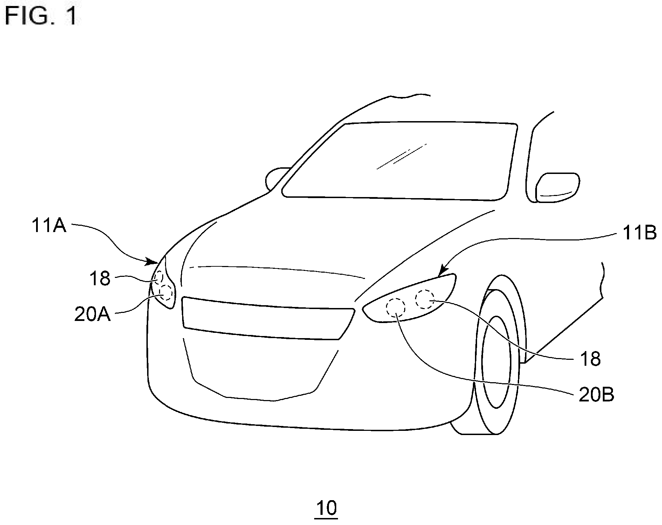

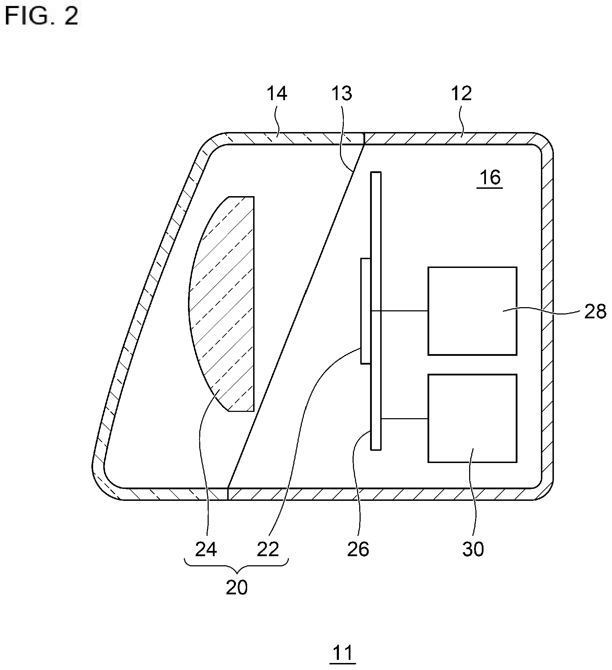

Fig. 1 is a schematic view showing a state in which the vehicle lamp according to the embodiment is mounted on a vehicle. Fig. 2 is a schematic cross-sectional view showing a schematic configuration of the vehicle lamp according to the embodiment. Fig. 2 schematically shows a vertical section of the vehicle lamp with the vehicle lamp attached to the vehicle as shown in Fig. 1.

The vehicle lamp 10 according to the embodiment is a vehicle headlamp apparatus equipped with a pair of headlamp units 11, i.e., a driver side headlamp 11A arranged on the driver side of the vehicle and a front passenger side headlamp 11B arranged on the front passenger side of the vehicle. Fig. 1 shows an example of a right-hand drive car that supports left-hand traffic, and the driver side headlamp 11A is shown on the left side and the front passenger side headlamp 11B is shown on the right on paper. Fig. 2 shows the driver side headlamp 11A. Except for the angular arrangement of the high beam units described later, the driver side headlamp 11A and the front passenger side headlamp 11B have generally symmetrical structures and have virtually identical configurations.

The headlamp unit 11 is, as shown in Fig. 2, equipped with a lamp body 12 having a front opening 13 and a translucent cover 14 mounted on the lamp body 12 to cover the front opening 13. The lamp body 12 and the translucent cover 14 constitute a lamp housing. Normally, the lamp body 12 is made of, for example, a suitable material such as a general-purpose resin material, and the translucent cover 14 is made of a suitable translucent material such as a translucent synthetic resin material or glass.

The headlamp unit 11 is equipped with a low beam unit 18 and a high beam unit 20. These two units are arranged in a lamp chamber 16, which is the internal space of this lamp housing.

The low beam unit 18 is configured to radiate a low beam light distribution pattern. The low beam unit 18 is equipped with a light source such as an LED and an optical system for projecting a light from the light source in front of the vehicle. Any known optical configuration for forming the low beam light distribution pattern can be adopted in the low beam unit 18.

The high beam unit 20 is configured to radiate a high beam light distribution pattern. The high beam unit 20 is equipped with a pattern generator 22 and a projection optical system 24. A support 26 for supporting the pattern generator 22 and the projection optical system 24 is provided in the lamp chamber 16.

As shown in Fig. 1, a first high beam unit 20A is mounted on the driver side headlamp 11A, and a second high beam unit 20B is mounted on the front passenger side headlamp 11B. As will be described in detail later, the first high beam unit 20A is capable of formation of a first high beam light distribution pattern and road surface drawing in a first irradiation range 34. The second high beam unit 20B is capable of formation of a second high beam light distribution pattern in a second irradiation range 36.

If necessary, an additional high beam unit may be mounted on the driver side headlamp 11A along with the first high beam unit 20A. Similarly, an additional high beam unit may be mounted on the front passenger side headlamp 11B along with the second high beam unit 20B.

The pattern generator 22 has a large number of pixels arranged in two dimensions, and each pixel can be controlled independently. The pattern generator 22 can generate a variety of light distribution patterns by controlling these pixels individually (e.g., turning them on or off). For example, a bright region in the light distribution pattern is formed by ON pixels, and a dark region in the light distribution pattern is formed by OFF pixels. In order to produce a light distribution pattern at a high resolution, the pattern generator 22 may have at least 1000 pixels or at least 10000 pixels.

The pattern generator 22 of this embodiment may be a device comprised of a large number of light-emitting elements (e.g., LEDs) arranged in a matrix. In this case, each individual light-emitting element functions as a pixel. A high-definition apparatus like this can also be called a pixel light or a matrix LED. For example, the pattern generator 22 may be a matrix LED light source with 64 rows and 256 columns.

Alternatively, a pattern generator of an alternative form may be used in place of a self-luminous pattern generators 22 like the above. For example, a light source may be used in combination with a MEMS (Micro Electro Mechanical Systems) device such as a micromirror device, or a liquid crystal display may be used.

So-called ADB (Adaptive Driving Beam) control, which dynamically and adaptively controls the high beam light distribution pattern based on the condition around the vehicle, may be applied to the pattern generator 22. As is known, ADB control can reduce or prevent glare that may be inflicted on a vehicle in front by detecting the vehicle in front, such as a leading vehicle or an oncoming vehicle located in front of the driver's vehicle, and forming a dark region in a portion within the high beam light distribution pattern Hi corresponding to the vehicle in front.

The pattern generator 22 is not only capable of formation of the high beam light distribution pattern but also road surface drawing. The pattern generator 22 may generate a light distribution pattern for road surface drawing (hereinafter, referred to as a road surface drawing pattern) in place of or in addition to the high beam light distribution pattern (which is inclusive of an ADB light distribution pattern). An example of such an operation will be described later.

The road surface drawing pattern is inclusive of various patterns that should be drawn on the road surface, such as desired letters, graphic forms, symbols, etc. By road surface drawing, various information can be presented. For example, the driver of the vehicle, pedestrians around the driver's vehicle, drivers of other vehicles, etc. can be alerted, or a message welcoming the driver entering the vehicle may be displayed on the ground near the vehicle.

The projection optical system 24 is configured to project the light distribution pattern generated by the pattern generator 22 outside the vehicle lamp 10. The projection optical system 24 is equipped with at least one optical member (e.g., a lens or a reflector). Typically, the projection optical system 24 may be, as illustrated, equipped with a projection lens that receives the light from the pattern generator 22 and projects the light outside the vehicle lamp 10 through the translucent cover 14. Alternatively, the projection optical system 24 may be an inverting optical system that inverts and projects the light distribution pattern generated on the pattern generator 22.

The support 26 is supported by the lamp body 12 in the lamp chamber 16 so that the support 26 can be tilted with respect to the lamp body 12. The support 26 may be, by way of example, a support member (e.g., a support bracket) having a plate-like part arranged in such a way that one surface thereof faces frontward (the side of the translucent cover 14) and the other surface faces rearward (the side of the lamp body 12). The support 26 may be made of a suitable material such as a synthetic resin material or a metal material. The support 26 may function as a heat dissipation member for dissipating the heat emitted by the pattern generator 22, or such a heat dissipation member may be mounted on the support 26. Any of various known configurations can be adopted as appropriate in the structure like this to the support the optical unit in the lamp chamber 16.

The support 26 may not only support the high beam unit 20 but also the low beam unit 18. The low beam unit 18 and the high beam unit 20 may be fixed to the support 26, in which case the relative positions of the low beam unit 18 and the high beam unit 20 on the support 26 remain unchanged.

The headlamp unit 11 is equipped with a lamp control ECU (Electronic Control Unit) that controls the vehicle lamp 10. The ECU can be implemented by a combination of a processor (hardware) such as a CPU (Central Processing Unit) and a microcomputer with a software program executed by the processor (hardware). The lamp ECU 28 may be arranged in the lamp chamber 16. The lamp ECU 28 may be mounted on the lamp body 12.

The lamp ECU 28 is configured to function as a lighting control circuit for the vehicle lamp 10, which controls the low beam unit 18 and the high beam unit 20. The lamp ECU 28 may acquire vehicle information required to control the vehicle lamp 10 from a high-level controller. For example, the lamp ECU 28 may control the operation of the low beam unit 18 (e.g., on-off, light intensity, etc.) based on the vehicle information. The lamp ECU 28 may control the operation of the high beam unit 20 (e.g., on-off, light distribution pattern, etc.) based on the vehicle information. In particular, the lamp ECU 28 may control the pattern generator 22 based on the vehicle information.

This high-level controller is an ECU that is located outside the vehicle lamp 10 to control the entire vehicle or a part thereof integrally and can also be called a vehicle ECU. The lamp ECU 28 can communicate with a vehicle ECU through a vehicle-mounted network that complies with a network protocol such as CAN (Controller Area Network) or LIN (Local Interconnect Network) or through other appropriate communication networks and can receive the vehicle information from the vehicle ECU via such a network.

Further, the headlamp unit 11 is equipped with an angular offset adjuster 30 to adjust the irradiation direction of the high beam unit 20 in the vertical direction. This allows the vehicle lamp 10 to set the irradiation direction of the high beam unit 20, i.e., the direction of the light (e.g., the high beam light distribution pattern, road surface drawing pattern) to be radiated from the high beam unit 20 outside the vehicle lamp 10 at a desired angle in the vertical direction. The angular offset adjuster 30 may be equipped with any known configuration to implement such adjustment.

For example, the angular offset adjuster 30 may be equipped with a manual adjustment mechanism, e.g., an aiming mechanism, that allows adjustment of the optical axis of the projection optical system 24 of the high beam unit 20. The aiming mechanism may have an aiming screw rotatably supported on the lamp body 12 and a screw hole formed on the support 26 to correspond to the aiming screw. The aiming mechanism may be configured in such a way that the optical axis of the projection optical system 24 supported by the support 26 can be adjusted in the vertical direction according to the rotation of the aiming screw in the screw hole.

The angular offset adjuster 30 may also be equipped with an automatic adjustment mechanism, e.g., a leveling mechanism, that allows adjustment of the optical axis of the projection optical system 24 of the high beam unit 20. The leveling mechanism may be equipped with a so-called leveling actuator that drives the support 26 to allow adjustment of the optical axis of the projection optical system 24 in the vertical direction. These automatic adjustment mechanisms may be controlled by the lamp ECU 28.

In the embodiment, the angular offset adjuster 30 is used to set an angular offset of the first high beam unit 20A more downward as compared to the second high beam unit 20B. The first irradiation direction of the first high beam unit 20A is directed more vertically downward than the second irradiation direction of the second high beam unit 20B by an amount by defined this angular offset. Accordingly, as described later, the first irradiation range provided by the first high beam unit 20A overlaps with the second irradiation range provided by the second high beam unit 20B in part and also extends further downward.

The angular offset of the first high beam unit 20A with respect to the second high beam unit 20B is determined as the default setting in the optical axis adjustment work performed during the steps of manufacturing the vehicle lamp 10 or the steps of assembly onto the vehicle and will not be changed thereafter. The angular offset is set by means of the angular offset adjuster 30 (e.g. an aiming mechanism) and is mechanically fixed. Therefore, the angular offset is maintained constant during the operation of the vehicle lamp 10 (e.g., while the vehicle is running).

It should be noted that leveling control may be performed in at least one of the two headlamp units 11 as necessary during the operation of the vehicle lamp 10. In this case, the vehicle lamp 10 may be configured in such a way that the leveling mechanisms of the driver side headlamp 11A and the front passenger side headlamp 11B are coordinated with each other to maintain the angular offset of the first high beam unit 20A with respect to the second high beam unit 20B. In this way, the optical axis adjustment of the two high beam units 20 can be performed in an integrated manner while maintaining the angular offset between the units.

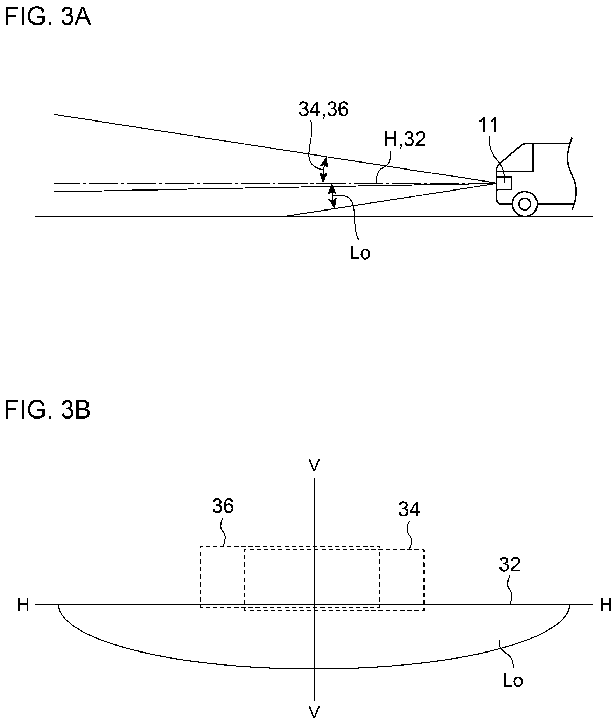

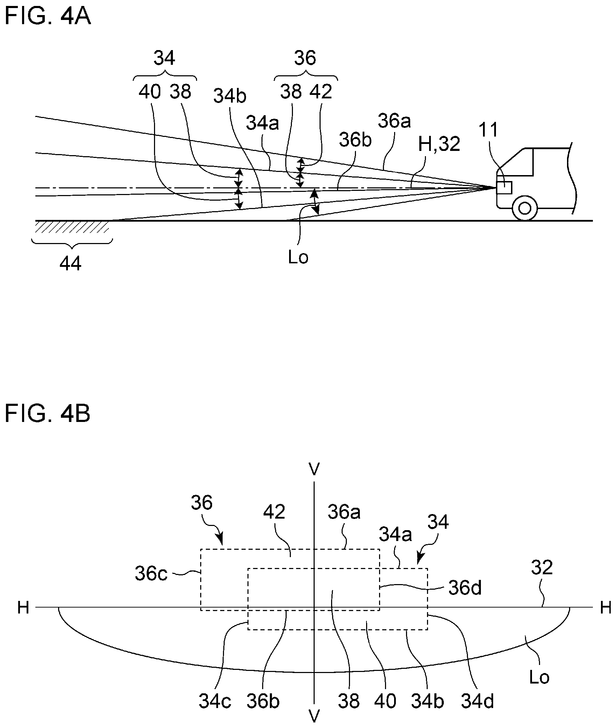

Fig. 3A is a schematic view showing an illustrative irradiation direction of a vehicle lamp according to a comparative example, and Fig. 3B is a schematic view showing an illustrative irradiation range of the vehicle lamp according to the comparative example. Further, Fig. 4A is a schematic view showing an illustrative irradiation direction of the vehicle lamp according to the embodiment, and Fig. 4B is a schematic view showing an illustrative irradiation range of the vehicle lamp according to the embodiment.

Fig. 3A and Fig. 4A schematically show the irradiation direction of the low beam unit 18, the first high beam unit 20A, and the second high beam unit 20B observed when the vehicle is viewed in the horizontal direction. Fig. 3B and Fig. 4B schematically show the irradiation range of the low beam unit 18, the first high beam unit 20A, and the second high beam unit 20B in front of the vehicle lamp (e.g., on a virtual vertical screen 25 m ahead).

The irradiation direction of the low beam unit 18 is the same in a typical existing vehicle lamp as a comparative example and in the vehicle lamp 10 according to the embodiment. As shown in Fig. 3A to Fig. 4B, the low beam unit 18 can form a low beam light distribution pattern Lo below a cut-off line 32. As is known, the low-beam light distribution pattern Lo is radiated to a predetermined area below the horizontal line H. The cut-off line 32 of the low beam light distribution pattern Lo is located on or near the horizontal line H.

Fig. 3B and Fig. 4B schematically show the cut-off line 32 as a single straight line along the horizontal line H. Alternatively, the cut-off line 32 may have a cut-off line on the side of the oncoming traffic lane extending parallel to the horizontal line H to the right of the vertical line V, a cut-off line on the side of the driver's traffic lane extending parallel to the horizontal line H at a position higher than the cut-off line on the side of the oncoming traffic lane to the left of the vertical line V, and a sloping cut-off line connecting the cut-off line on the side of the oncoming traffic lane and the cut-off line on the side of the driver's traffic lane at a position therebetween.

Further, the irradiation direction of the low beam unit 18 is common to the two headlamp units 11 in the vehicle lamp 10 according to the embodiment, which also applies to the comparative example. With regard to the low beam unit 18, unlike the case of the high beam unit 20, a vertical angular offset is not set between the two low beam units 18. The low beam light distribution pattern Lo from each low beam unit 18 is formed at virtually the same place at least in the vertical direction and overlaps each other.

Meanwhile, the irradiation direction of the first high beam unit 20A differs between the comparative example and the embodiment. In the comparative example, a vertical angular offset is not set between the two high beam units 20. The first high beam unit 20A and the second high beam unit 20B provide the first irradiation range 34 and the second irradiation range 36, respectively, above the horizontal line H or the neighborhood thereof. As shown in Fig. 3A and Fig. 3B, the first irradiation range 34 and the second irradiation range 36 are located at the same height in the vertical direction. Further, the lower edge of these irradiation range in the vertical direction is located on or near the horizontal line H. In Fig. 3B, however, the first irradiation range 34 and the second irradiation range 36 are shown with dashed lines slightly displaced vertically for convenience to distinguish between the two. Meanwhile, the first irradiation range 34 and the second irradiation range 36 are displaced from each other in the horizontal direction. The first irradiation range 34 is displaced rightward from the second irradiation range 36 to overlap with the second irradiation range 36 in part. The right edge of the first irradiation range 34 and the left edge of the second irradiation range 36 are located at equal distance from the vertical line V on mutually opposite sides with respect to the vertical line V.

In the comparative example, these high beam units 20 form a high beam light distribution pattern in the first irradiation range 34 and the second irradiation range 36. As is known, the high-beam light distribution pattern is radiated to a predetermined area above the horizontal line H. The lower edge of the high beam light distribution pattern may be radiated slightly below the cut-off line 32 of the low beam light distribution pattern Lo, and the high beam light distribution pattern may overlap the low beam light distribution pattern Lo in part in the vertical direction.

In the embodiment, on the other hand, the first irradiation direction of the first high beam unit 20A is directed more downward in the vertical direction as compared to the second irradiation direction of the second high beam unit 20B according to the downward angular offset described above. The irradiation direction of the second high beam unit 20B is the same in the comparative example and in the embodiment.

Thus, as shown in Fig. 4A and Fig. 4B, the first irradiation range 34 is displaced downward in the vertical direction with respect to the second irradiation range 36. The second high beam unit 20B provides the second irradiation range 36 above the horizontal line H or the neighborhood thereof, while the first high beam unit 20A provides the first irradiation range 34 that overlaps with the second irradiation range in part and extends further downward. The second irradiation range 36 extends more upward as compared to the first irradiation range 34.

The first irradiation range 34 represents the maximum range that the first high beam unit 20A can irradiate. By turning on all the pixels of the pattern generator 22 of the first high beam unit 20A, the entirety of the first irradiation range 34 can be irradiated with light. By controlling the pattern generator 22, the first high beam light distribution pattern by the first high beam unit 20A can be formed at least in a portion of the first irradiation range 34. Similarly, the second irradiation range 36 represents the maximum range that the second high beam unit 20B can irradiate. By turning on all pixels of the pattern generator 22 of the second high beam unit 20B, the entirety of the second irradiation range 36 can be irradiated with light. By controlling the pattern generator 22, the second high beam light distribution pattern by the second high beam unit 20B can be formed at least in a portion of the second irradiation range 36.

As shown in Fig. 4B by way of example, the first irradiation range 34 may have a rectangular shape delineated by a first upper edge 34a, a first lower edge 34b, a first left edge 34c, and a first right edge 34d. The first upper edge 34a and the first lower edge 34b are parallel to the horizontal line H, and the first left edge 34c and the first right edge 34d are parallel to the vertical line V. Similarly, the second irradiation range 36 may have a rectangular shape delineated by a second upper edge 36a, a second lower edge 36b, a second left edge 36c, and the second right edge 36d. The second upper edge 36a and the second lower edge 36b are parallel to the horizontal line H, and the second left edge 36c and the second right edge 36d are parallel to the vertical line V.

Since the first irradiation range 34 overlaps with the second irradiation range 36 in part, the first upper edge 34a of the first irradiation range 34 is located between the second upper edge 36a and the second lower edge 36b of the second irradiation range 36 and below the second upper edge 36a in the vertical direction. The second lower edge 36b of the second irradiation range 36 is located between the first upper edge 34a and the first lower edge 34b of the first irradiation range 34 and below the first upper edge 34a in the vertical direction. Specifically, the second lower edge 36b is located on or near the horizontal line H.

In association with the fact that the two high beam units 20 have the same optical configuration, including the pattern generator 22, the first irradiation range 34 and the second irradiation range 36 may be identical in shape and area. Therefore, the first upper edge 34a of the first irradiation range 34 and the second upper edge 36a of the second irradiation range 36 may be identical in length. Similarly, the lower edges (i.e., the first lower edge 34b and the second lower edge 36b), the left edges, and the right edges of these two irradiation ranges may be identical in length, respectively.

The first irradiation range 34 includes an overlapping area 38 where the first irradiation range 34 and the second irradiation range 36 overlap and a lower area 40 below the overlapping area 38 and outside the second irradiation range 36. In the vertical direction, the overlapping area 38 is defined by the first upper edge 34a and the second lower edge 36b, and the lower area 40 is defined by the second lower edge 36b and the first lower edge 34b. The lower area 40 is adjacent to the overlapping area 38 in the vertical direction at the second lower edge 36b. Since the second lower edge 36b is located on or near the horizontal line H as described above, the light radiated from the first high beam unit 20A to the overlapping area 38 travels above the road surface, and the light radiated to the lower area 40 travels below the horizontal line H and reaches an area 44 on the road surface in front of the vehicle. Utilizing this, the first high beam unit 20A forms at least a portion of the first high beam light distribution pattern in the overlapping area 38 of the first irradiation range 34 and provides road surface drawing in the lower area 40.

The second irradiation range 36 includes the overlapping area 38 and an upper area 42 above the overlapping area 38 and outside the first irradiation range 34. The upper area 42 is defined by the second upper edge 36a and the first upper edge 34a. The upper area 42 is adjacent to the overlapping area 38 in the vertical direction at the first upper edge 34a. The second high beam unit 20B forms at least a portion of the second high beam light distribution pattern in the overlapping area 38 of the second irradiation range 36. Further, the second high beam unit 20B may form at least a portion of the second high beam light distribution pattern in the upper area 42.

The overlapping area 38 can provide illumination of higher luminous intensity as compared to the other areas. In the overlapping area 38, both the first high beam unit 20A and the second high beam unit 20B can form a high beam light distribution pattern, and so the superposition of patterns can provide high beam irradiation of higher luminous intensity. This makes it easy to meet the predetermined luminous intensity standard required of high beams.

Meanwhile, the lower area 40 can provide illumination of lower luminous intensity as compared to the overlapping area 38 by being irradiated by the first high beam unit 20A alone. Therefore, the lower area 40 can be used to form a road surface drawing pattern or other light distribution patterns for which lower luminous intensity than that of a high beam is allowed.

The height of the lower area 40 in the vertical direction from the first lower edge 34b to the second lower edge 36b is determined according to the magnitude of the downward angular offset of the first high beam unit 20A with respect to the second high beam unit 20B. This downward angular offset may be, for example, at least 1.00° or may be preferably at least 1.50°. The upward angular offset may be represented as a positive value, and the downward angular offset as a negative value, in which case the angular offset of the first high beam unit 20A with respect to the second high beam unit 20B may be equal to or less than -1.00° or preferably equal to or less than -1.50°. In this way, the lower area 40 of the first irradiation range 34 can be provided with a practically suitable vertical height for road surface drawing.

The downward angular offset of the first high beam unit 20A with respect to the second high beam unit 20B may be, for example, 3.00° at most or may be preferably 2.50° at most. In other words, the angular offset of the first high beam unit 20A with respect to the second high beam unit 20B may be, for example, equal to or more than -3.00° or may be preferably equal to or more than -2.50°. In this way, the lower area 40 can be provided with a sufficiently large vertical height for road surface drawing in the first irradiation range 34. In addition to that, this angular offset condition helps to prevent the vertical height of the overlapping area 38 for high beam irradiation (which may include ADB control) from becoming too small.

Also, the downward angular offset of the first high beam unit 20A with respect to the horizontal line H (i.e., the angular position of the first lower edge 34b of the first irradiation range 34 with respect to the horizontal line H) may be, for example, in a range between 2.50° and 4.50°, inclusive, or preferably in a range between 3.00° and 4.00°, inclusive, given that the horizontal line H is denoted by 0°. In the case the downward angular offset is represented as a negative value, the angular offset of the first high beam unit 20A with respect to the horizontal line H may be, for example, in a range between -2.50° and -4.50°, inclusive, or preferably in a range between -3.00° and -4.00°, inclusive. In this way, it is possible to provide road surface drawing by the first high beam unit 20A at a vertical position below the horizontal line H that is relatively easy for the driver to see. In addition, it is possible to avoid excessively downward direction of the high beam irradiation by the first high beam unit 20A.

The downward angular offset of the second high beam unit 20B with respect to the horizontal line H (i.e., the angular position of the second lower edge 36b of the second irradiation range 36 with respect to the horizontal line H) may be, for example, equal to or less than ±2.00°, equal to or less than ±1.50°, or equal to or less than ±1.00° given that the horizontal line H is denoted by 0°. In order to overlap the second irradiation range 36 and the low beam light distribution pattern Lo in part in the vertical direction, the angular offset of the second high beam unit 20B with respect to the horizontal line H may be, for example, in a range between 0.00° and -2.00°, inclusive, or preferably in a range between -0.57° and -1.50°, inclusive.

The first irradiation range 34 and the second irradiation range 36 are displaced from each other in the horizontal direction, as in the comparative example. The first irradiation range 34 is displaced to the right with respect to the second irradiation range 36 so as to overlap with the second irradiation range 36 in part. The first left edge 34c of the first irradiation range 34 is located to the right of the second left edge 36c between the second left edge 36c and the second right edge 36d of the second irradiation range 36. The second right edge 36d of the second irradiation range 36 is located to the left of the first right edge 34d between the first left edge 34c and the first right edge 34d of the first irradiation range 34. The first right edge 34d of the first irradiation range 34 and the second left edge 36c of the second irradiation range 36 are located at equal distance from the vertical line V on mutually opposite sides with respect to the vertical line V.

Because the first irradiation range 34 and the second irradiation range 36 are thus displaced in the horizontal direction, the lower area 40 of the first irradiation range 34 extends upward as far as the first upper edge 34a of the first irradiation range 34 to the right of the second irradiation range 36. This lateral area, which extends upward to the right of the overlapping area 38, may be utilized to form at least a portion of the first high beam light distribution pattern or other light distribution patterns, since the first high beam unit 20A alone can provide illumination of lower luminous intensity in the lateral area than in the overlapping area 38. Similarly, the upper area 42 of the second irradiation range 36 extends downward to the left of the first irradiation range 34 as far as the second lower edge 36b of the second irradiation range 36. This lateral area may also be utilized to form at least a portion of the second high beam light distribution pattern.

Of the light radiated from vehicle lamp 10, the light directed below the horizontal line H is used for road surface drawing. In other words, the light directed above the horizontal line H does not reach the road surface and so cannot be used for road surface drawing. Since the irradiation range of the high beam unit 20 of the vehicle lamp according to the comparative example is above the horizon line H, as understood from Fig. 3A and Fig. 3B, these high beam units 20 cannot provide road surface drawing. Meanwhile, as understood from Fig. 4A and Fig. 4B, the first irradiation range 34 of the first high beam unit 20A reaches the area 44 on the road surface so that road surface drawing can be provided by using the first high beam unit 20A according to the embodiment.

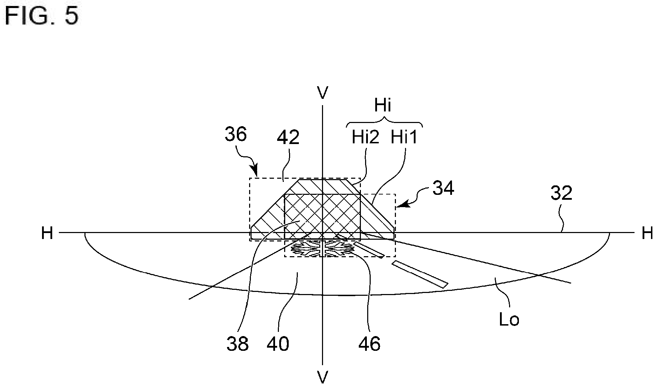

Fig. 5 is a schematic view showing an exemplary operation that can be performed in the vehicle lamp 10 according to the embodiment. Fig. 5 schematically shows the low beam light distribution pattern Lo, the high beam light distribution pattern Hi, and a road surface drawing pattern 46 radiated from the vehicle lamp 10.

In this exemplary operation, the first high beam unit 20A forms the first high beam light distribution pattern Hi1 and the road surface drawing pattern 46 in the first irradiation range 34. The first high beam light distribution pattern Hi1 is formed in the overlapping area 38 of the first irradiation range 34 and is also formed in a portion of the lateral area displaced from the overlapping area 38 to the right. The road surface drawing pattern 46 is formed in the lower area 40. As an example of the road surface drawing pattern 46, a warning mark to inform the driver that the vehicle is traveling on a slippery surface such as snowy surface and an icy surface. The second high beam unit 20B forms a second high beam light distribution pattern Hi2 in the second irradiation range 36. The second high beam light distribution pattern Hi2 is formed in the overlapping area 38 of the second irradiation range 36 and is also formed in a portion of the lateral area displaced from the overlapping area 38 to the left. The first high beam light distribution pattern Hi1 and the second high beam light distribution pattern Hi2 are synthesized to form a roughly trapezoidal high beam light distribution pattern Hi as illustrated above the cut-off line 32 of the low beam light distribution pattern Lo.

Thus, according to the embodiment, the first high beam unit 20A can provide road surface drawing by utilizing the lower area 40. At the same time, the first high beam unit 20A and the second high beam unit 20B can be used to radiate the high beam. In this way, it is possible to provide a vehicle headlamp apparatus capable of both high beam irradiation and road surface drawing.

The angular offset of the first high beam unit 20A with respect to the second high beam unit 20B remains unchanged regardless of whether the first high beam unit 20A is performing road surface drawing. The angular offset is preset and is not changed while the vehicle is running. In this way, the first high beam unit 20A can set the lower area 40 for road surface drawing in the first irradiation range 34 according to the fixed relative angular positions of the two high beam units 20. According to the embodiment, therefore, there is no need to perform leveling control of the high beam unit 20 to switch between high beam irradiation and road surface drawing as in the related art, and the vehicle lamp 10 can easily perform high beam irradiation and road surface drawing at the same time. The vehicle lamp 10 can also perform high beam irradiation, including ADB control, while performing road surface drawing.

Further, the first high beam unit 20A is mounted on the driver side headlamp 11A, and the second high beam unit 20B is mounted on the front passenger side headlamp 11B. This makes it easy for the first high beam unit 20A to perform road surface drawing at a position on the road surface that is easy for the driver to see.

The present invention is not limited to the embodiment and the variations described above. The embodiment and the variation may be combined or may be subject to further modification such as various design changes, based on the knowledge of skilled persons. The embodiment and the variation thus combined or modified are also encompassed by the scope of the present invention. New embodiments created by the combination of the embodiment and the variation described above and by the combination of the embodiment and/or the variation described above plus the variation(s) described below provide the respective advantages of embodiment, the variation, and the further variation combined.

In one embodiment, contrary to the above-mentioned embodiment, the first high beam unit 20A may be mounted on the front passenger side headlamp 11B, and the second high beam unit 20B may be mounted on the driver side headlamp 11A. This can also provide a vehicle headlamp apparatus capable of both high beam irradiation and road surface drawing.

Alternatively, both the first high beam unit 20A and the second high beam unit 20B may be mounted on one of the pair of headlamp units 11. Alternatively, both the first high beam unit 20A and the second high beam unit 20B may be mounted on both of the pair of headlamp units 11.

The present invention has been described by using specific language based on the embodiment. However, the embodiment merely illustrates one aspect of the principle and application of the present invention. A number of modifications and changes in the arrangement may be made in the embodiment to the extent that they do not depart from the idea of the present invention defined by the claims.

The embodiment can be represented by the following numbered items.
1. A vehicle headlamp apparatus including:
   a first high beam unit capable of formation of a first high beam light distribution pattern and road surface drawing in a first irradiation range; and
   a second high beam unit capable of formation of a second high beam light distribution pattern in a second irradiation range,
   wherein the first irradiation range is displaced downward with respect to the second irradiation range to include an overlapping area in which the first irradiation range and the second irradiation range overlap and a lower area below the overlapping area and outside the second irradiation range, and
   wherein the first high beam unit forms a road surface drawing pattern in the lower area.
2. The vehicle headlamp apparatus according to item 1,
   wherein the first high beam unit forms at least a portion of the first high beam light distribution pattern in the overlapping area of the first irradiation range, and
   wherein the second high beam unit forms at least a portion of the second high beam light distribution pattern in the overlapping area of the second irradiation range.
3. The vehicle headlamp apparatus according to item 1 or 2,
   wherein the first high beam unit is arranged to have a downward angular offset with respect to the second high beam unit so that the first irradiation range is displaced downward with respect to the second irradiation range, and
   wherein the downward angular offset remains unchanged regardless of whether the first high beam unit is performing road surface drawing.
4. The vehicle headlamp apparatus according to item 3,
   wherein the downward angular offset is at least 1.00°.
5. The vehicle headlamp apparatus according to item 3 or 4,
   wherein the downward angular offset is 3.00° at most.
6. The vehicle headlamp apparatus according to any one of items 3 through 5,
   wherein the first high beam unit is equipped with an angular offset adjuster to adjust the downward angular offset.
7. The vehicle headlamp apparatus according to items 1 through 6,
   wherein the angular offset of the first high beam unit with respect to a horizontal line is in a range between -2.50° and -4.50°, inclusive.
8. The vehicle headlamp apparatus according to any one of items 1 through 7,
   wherein the angular offset of the second high beam unit with respect to a horizontal line is in a range between +2.00° and -2.00°, inclusive.
9. The vehicle headlamp apparatus according to any one of items 1 through 8,
   wherein the second irradiation range includes an upper area above the overlapping area and outside the first irradiation range.
10. The vehicle headlamp apparatus according to any one of items 1 through 9,
   wherein the vehicle headlamp apparatus is equipped with a driver side headlamp arranged on a driver side of a vehicle and a front passenger side headlamp arranged on a front passenger side of the vehicle, and
   wherein the first high beam unit is mounted on the driver side headlamp, and the second high beam unit is mounted on the front passenger side headlamp.

### INDUSTRIAL APPLICABILITY

The present invention can be used in a vehicle headlamp apparatus that can be mounted on a vehicle such as a car.

### REFERENCE SIGNS LIST

10 vehicle lamp, 11 headlamp unit, 11A driver side head lamp, 11B front passenger side headlamp, 20 high beam unit, 20A first high beam unit, 20B second high beam unit, 34 first irradiation range, 36 second irradiation range, 38 overlapping area, 40 lower area, 42 upper area, 46 road surface drawing pattern

## Claims

1. A vehicle headlamp apparatus comprising:
a first high beam unit capable of formation of a first high beam light distribution pattern and road surface drawing in a first irradiation range; and
a second high beam unit capable of formation of a second high beam light distribution pattern in a second irradiation range,
wherein the first irradiation range is displaced downward with respect to the second irradiation range to include an overlapping area in which the first irradiation range and the second irradiation range overlap and a lower area below the overlapping area and outside the second irradiation range, and
wherein the first high beam unit forms a road surface drawing pattern in the lower area.

2. The vehicle headlamp apparatus according to Claim 1,
wherein the first high beam unit forms at least a portion of the first high beam light distribution pattern in the overlapping area of the first irradiation range, and
wherein the second high beam unit forms at least a portion of the second high beam light distribution pattern in the overlapping area of the second irradiation range.

3. The vehicle headlamp apparatus according to Claim 1,
wherein the first high beam unit is arranged to have a downward angular offset with respect to the second high beam unit so that the first irradiation range is displaced downward with respect to the second irradiation range, and
wherein the downward angular offset remains unchanged regardless of whether the first high beam unit is performing road surface drawing.

4. The vehicle headlamp apparatus according to Claim 3,
wherein the downward angular offset is at least 1.00°.

5. The vehicle headlamp apparatus according to Claim 3,
wherein the downward angular offset is 3.00° at most.

6. The vehicle headlamp apparatus according to Claim 3,
wherein the first high beam unit is equipped with an angular offset adjuster to adjust the downward angular offset.

7. The vehicle headlamp apparatus according to Claim 1,
wherein the angular offset of the first high beam unit with respect to a horizontal line is in a range between -2.50° and -4.50°, inclusive.

8. The vehicle headlamp apparatus according to Claim 1,
wherein the angular offset of the second high beam unit with respect to a horizontal line is in a range between +2.00° and -2.00°, inclusive.

9. The vehicle headlamp apparatus according to Claim 1,
wherein the second irradiation range includes an upper area above the overlapping area and outside the first irradiation range.

10. The vehicle headlamp apparatus according to any one of Claims 1 through 9,
wherein the vehicle headlamp apparatus is equipped with a driver side headlamp arranged on a driver side of a vehicle and a front passenger side headlamp arranged on a front passenger side of the vehicle, and
wherein the first high beam unit is mounted on the driver side headlamp, and the second high beam unit is mounted on the front passenger side headlamp.
